# EUROPÄISCHE PATENTANMELDUNG

(11) **EP 1 022 405 A1**
(43) Veröffentlichungstag der Anmeldung: **26.07.2000**
(21) Anmeldenummer: 00100285.6
(22) Anmeldetag: 20.01.2000
(51) Int. Cl.: E04B 9/00, E04B 9/28

(54) **Deckenaufbau mit abgehängten Deckenelementen**

(30) Priorität: 21.01.1999 DE 29900975 U
(71) Anmelder: LINDNER AG, D-94424 Arnstorf (DE)
(72) Erfinder: Schmidhuber, Martin, 94424 Arnstorf (DE); Kiermaier, Alois, 94439 Münchsdorf (DE)
(74) Vertreter: Klingseisen, Franz, Dipl.-Ing.

(57) **Zusammenfassung**

Die Erfindung betrifft einen Deckenaufbau mit an einer Rohdecke (1) abgehängten Deckenelementen (13), die in Längsspalten (10) von Hohlprofilen (3) eingehängt sind, die in einem Abstand voneinander an der Rohdecke (1) angebracht sind und einen Deckenbandraster bilden, wobei in der quer zur Längsrichtung des Hohlprofils (3) liegenden Querfuge (14') zwischen benachbarten Deckenelementen (13) ein Adapterstück (16) in dem Hohlprofil (3) lösbar einsetzbar ist, an dem eine Trennwand (35) bzw. ein Trennwand-Deckenprofil (20) lösbar befestigbar ist, das sich in Richtung des Hohlprofils (3) erstreckt.

## Beschreibung

Die Erfindung betrifft einen Deckenaufbau mit an einer Rohdecke abgehängten Deckenelementen.

Abgehängte Decken erfüllen im Innenausbau vielseitige Anforderungen. Zum Anbringen der Deckenelemente sind sowohl Klemmkonstruktionen als auch Auflageprofile wie z. B. T-Profile, sichtbare C-Deckenbandraster und auch Einhängeprofile bekannt. Für die Befestigung von Trennwänden unter einer abgehängten Decke werden zwischen den Deckenelementen im Querschnitt C-förmige Profile als Deckenbandraster montiert, an denen wiederum die Trennwände von unten befestigt, beispielsweise angeschraubt werden. An den Bereichen, an denen keine Trennwand vorgesehen ist, ist ein solcher C-Deckenbandraster zwischen den Deckenelementen sichtbar, was nicht immer erwünscht ist, und es verbleiben Bohrungen in dem C-Deckenbandraster, wenn eine schon montierte Trennwand versetzt werden soll.

Der Erfindung liegt die Aufgabe zugrunde, einen Deckenaufbau mit Deckenelementen so auszubilden, daß für die Montage von Trennwänden keine sichtbaren C-Deckenbandraster erforderlich sind und im Falle des Versetzens von schon montierten Trennwänden keine Montagespuren sichtbar bleiben.

Diese Aufgabe wird erfindungsgemäß durch die Merkmale im Anspruch 1 gelöst. Dadurch, daß die Deckenelemente in einem Längsspalt eines Hohlprofils auf dessen beiden Seiten so eingehängt werden, daß noch eine durchgehend freie Fuge zwischen den Rändern der Deckenelemente verbleibt, kann durch diese verbleibende Fuge hindurch ein Befestigungselement für eine unter den Deckenelementen anzuordnende Trennwand eingesetzt werden. Bei nicht montierter Trennwand ist kein Befestigungselement sichtbar und beim Versetzen einer schon montierten Trennwand verbleibt keine sichtbare Montagespur an der abgehängten Decke, wenn die Befestigungselemente der Trennwand aus der Fuge zwischen den Deckenelementen entfernt werden.

Die Erfindung wird beispielsweise anhand der Zeichnungen näher erläutert. Es zeigen
- Fig. 1: einen Querschnitt durch ein Hohlprofil, das an einer Rohdecke befestigt ist und ein Deckenbandrasterprofil bildet, an dem Deckenelemente eingehängt sind,
- Fig. 2: das in Fig. 1 verwendete Hohlprofil im Querschnitt,
- Fig. 3: einen Querschnitt durch eine vereinfachte Ausfürungsform des Hohlprofils,
- Fig. 4: in perspektivischer Ansicht ein Befestigungselement bzw. ein Adapterstück für eine Trennwand,
- Fig. 5: ein in eine abgewandelte Ausführungsform des Hohlprofils eingesetztes Adapterstück nach Fig. 3,
- Fig. 6: in perspektivischer Schnittansicht ein in das Hohlprofil eingesetztes Adapterstück für die Befestigung einer Trennwand,
- Fig. 7: eine Ansicht der abgehängten Decke von unten mit schematischer Darstellung der Befestigung einer Trennwand,
- Fig. 8: eine abgewandelte Ausführungsform eines Einhängeelementes an einem Deckenelement, und
- Fig. 9: in perspektivischer Ansicht ein modifiziertes Adapterstück.

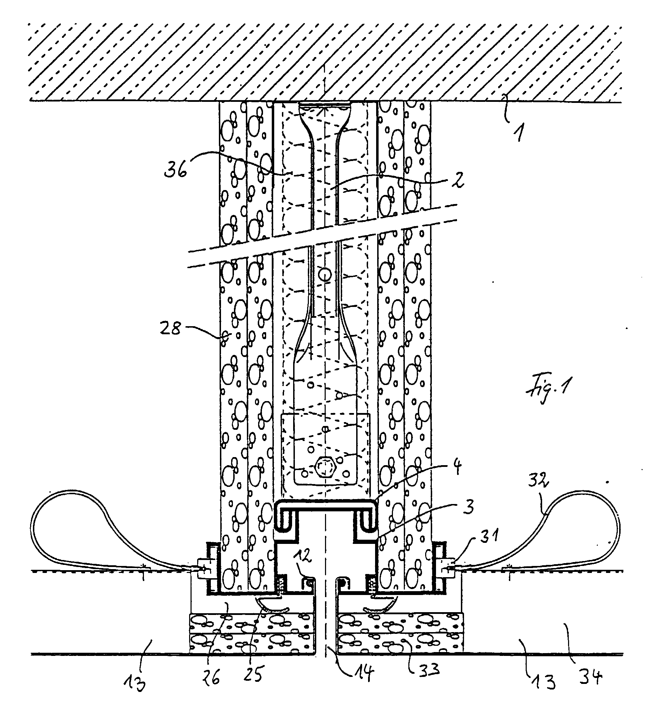

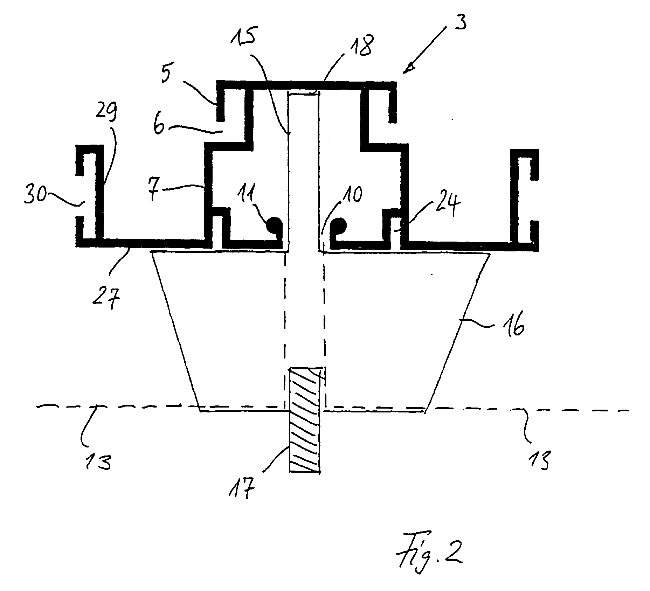

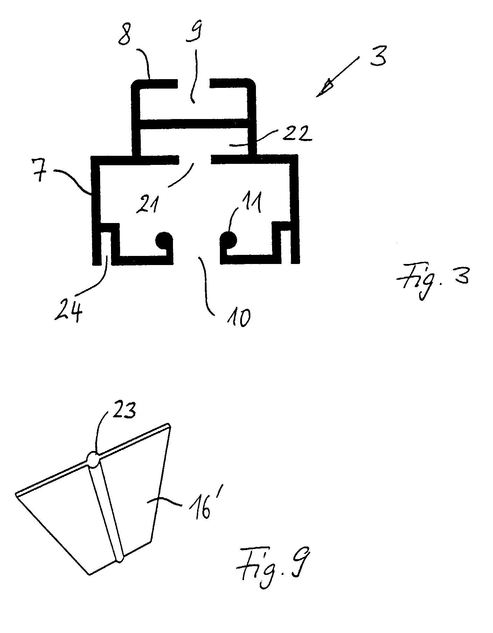

In Fig. 1 ist mit 1 eine Rohdecke bezeichnet, an der mittels eines Abhängeelements 2 ein allgemein mit 3 bezeichnetes und im einzelnen in Fig. 2 wiedergegebenes Hohlprofil eingehängt ist. Fig. 3 zeigt eine vereinfachte Ausführungsform des Hohlprofils.

An den in einem Abstand voneinander angebrachten Abhängeelementen 2 ist eine im Querschnitt U-förmige Schiene 4 befestigt, deren Schenkelenden nach innen U-förmig umgebogen sind. In diese umgebogenen Schenkelenden der Schiene 4 sind abgewinkelte Ränder 5 des Hohlprofils 3 nach den Fig. 1 und 2 eingesetzt. Diese nach unten abgewinkelten Ränder 5 sind beiderseits des Hohlprofils 3 in einem abgesetzten Bereich 6 am Hohlprofil angeformt, so daß diese abgewinkelte Ränder 5 nicht über die Seitenflächen 7 des Hohlprofils 3 überstehen. Bei der Anordnung nach Fig. 1 sind die Abmessungen so ausgelegt, daß die Außenseiten der Schenkel der U-Schiene 4 mit den Seitenflächen 7 des Hohlprofils 3 fluchten.

Fig. 3 zeigt eine abgewandelte Ausführungsform des Hohlprofils 3, wobei auf der Oberseite nach innen abgewinkelte Ränder 8 ausgebildet sind, die zwischen sich einen Spalt 9 und eine T-förmige Nut bilden. Hierdurch kann das Hohlprofil 3 nach Fig. 3 an einer im Querschnitt T-förmigen Schiene 4 oder entsprechend gestalteten Befestigungselementen angebracht werden.

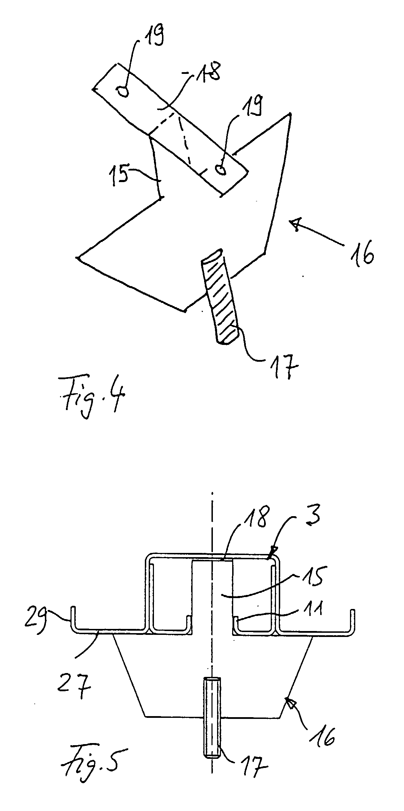

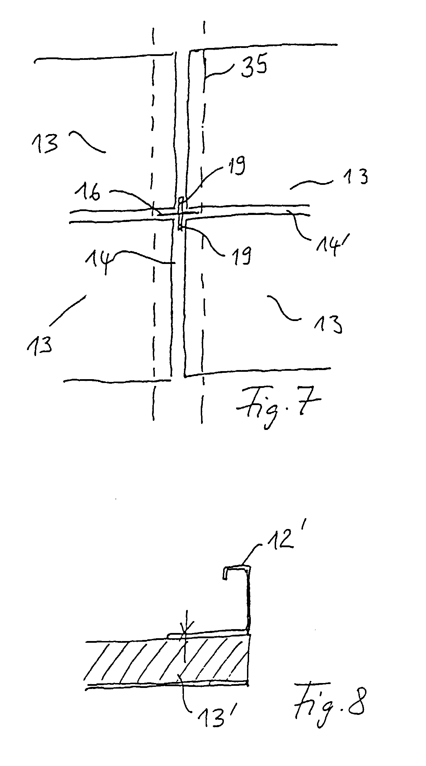

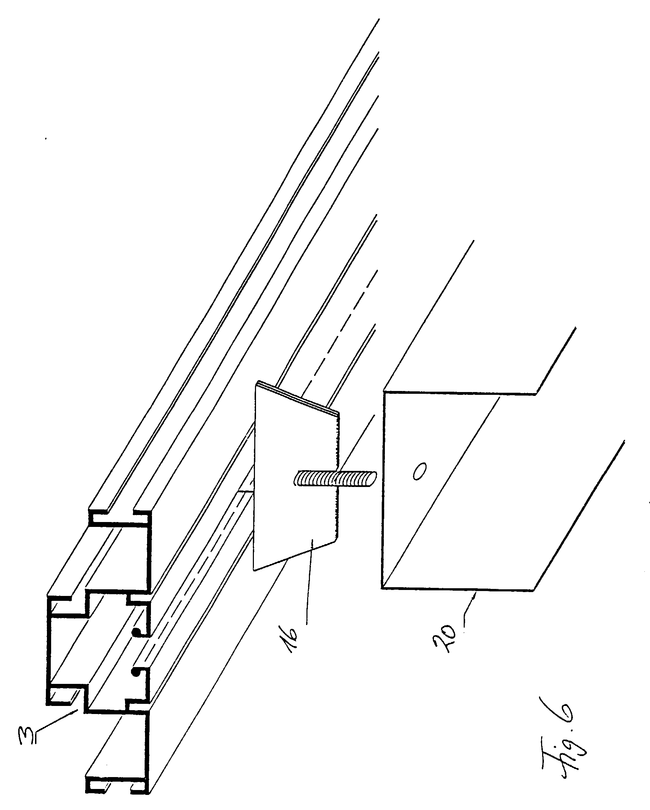

Auf der Unterseite des Hohlprofils 3 ist ein Längsspalt 10 ausgebildet, wobei die den Längsspalt 10 begrenzenden Ränder des Hohlprofils etwas nach innen abgewinkelt und mit wulstförmigen freien Enden 11 versehen sind, damit U-förmig abgewinkelte Einhängelaschen oder U-förmig abgewinkelte Ränder 12 von Deckenelementen 13 leichter ein- und ausgehängt werden können. Bei der Ausgestaltung nach Fig. 1 ist der Längsspalt 10 des Hohlprofils 3 so ausgelegt, daß ein abgewinkelter Rand 12 eines Deckenelementes 13 eingeschoben und danach eingehängt werden kann, worauf der Längsspalt 10 im wesentlichen über seine Breite freiliegt, so daß auch der abgewinkelte Rand 12 des benachbarten Deckenelementes 13 eingeführt und eingehängt werden kann und zwischen den eingehängten Rändern der Deckenelemente 13 eine Fuge 14 verbleibt, durch die ein Steg 15 eines Adapterstücks 16 (Fig. 4) nach Fig. 7 in einem Fugenkreuzungspunkt eingesetzt werden kann.

Das in den Fig. 4 bis 6 wiedergegebene Adapterstück 16 ist beispielsweise in Form eines trapezförmigen Blechstückes ausgebildet, das auf der Oberseite mit dem nach oben ragenden Steg 15 und gegenüberliegend auf der Unterseite mit einem Gewindeschaft 17 versehen ist. Quer zur Ebene des Adapterstücks 16 ist am oberen Ende des Schafts 15 eine langgestreckte Lasche 18 angebracht, die mit Bohrungen 19 an den Enden versehen ist. Der Schaft 15 mit der Lasche 18 wird durch die Fuge 14 zwischen den Rändern benachbarter Deckenelemente 13 (Fig. 1) eingeführt und beispielsweise mittels Befestigungsschrauben, die durch die Bohrungen 19 eingesetzt werden, auf der inneren Oberseite des Hohlprofils 3 befestigt.

Fig. 5 zeigt ein in eine vereinfachte Ausführungsform eines Hohlprofils 3 eingesetztes Adapterstück 16, wobei die Lasche 18 an der inneren Oberseite des Hohlprofils 3 anliegt, das bei dem in Fig. 5 wiedergegebenen Ausführungsbeispiel aus entsprechend abgewinkelten Blechstreifen zusammengesetzt ist.

Wie Fig. 6 zeigt, wird auf dem Gewindeschaft 17 eines Adapterstücks 16 ein im Querschnitt U-förmiges Trennwand-Deckenprofil 20 mittels einer Mutter befestigt, worauf in dem Trennwand-Deckenprofil 20 eine Trennwand befestigt oder in dieses eingesetzt werden kann.

Wenn eine in dieser Weise montierte Trennwand versetzt werden soll, wird die Trennwand von dem Deckenprofil 20 ab- oder aus diesem herausgenommen und das Deckenprofil von den Adapterstücken 16 gelöst, worauf diese aus dem Hohlprofil 3 entfernt werden können, ohne das an der abgehängten Decke Montagespuren der vorher angebrachten Trennwand verbleiben.

Bei der Ausführungsform des Hohlprofils 3 nach Fig. 3 ist an der inneren Oberseite des Hohlprofils ein Längsspalt 21 mit einem darüber liegenden Hohlraum 22 ausgebildet, so daß sich eine T-förmige Nutausbildung ergibt, die zur Aufnahme eines Schraubenkopfes vorgesehen ist, wobei sich der Schraubenschaft durch den Längsspalt 21 erstreckt. An dem Schraubenschaft kann ein in Fig. 9 wiedergegebenes Adapterstück 16' befestigt werden, das mit einer Gewindebohrung 23 versehen ist.

Die T-förmige Nut an der äußeren Oberseite des Hohlprofils 3 nach Fig. 3 dient zur Aufnahme eines Schraubenkopfes, dessen Schraubenschaft für die Befestigung an einem Abhängeelement dient.

Das Hohlprofil ist zweckmäßigerweise auf der Unterseite beiderseits des Längsspalts 10 mit einer Nut 24 (Fig. 2 und 3) versehen, in die eine Dichtung 25 eingesetzt werden kann, die den für die Montage notwendigen Hohlraum 26 an einem Deckenelement 13 abdichtet. Diese Dichtung 25 ist als nachgiebige Lippendichtung ausgebildet, die beim Anheben des Deckenelements 13 zum Aushängen des Randes 12 vom Rand 11 des Hohlprofils 3 leicht zusammengedrückt werden kann. Eine derartige Dichtung 25 dient vor allem zur Schalldämmung zwischen den beiden Räumen beiderseits einer an dem Hohlprofil 3 befestigten Trennwand.

Bei der Ausführungsform des Hohlprofils 3 nach den Fig. 1 und 2 sind seitlich abstehende Tragflächen 27 ausgebildet, auf denen Gipskartonplatten 28 (Fig. 1) aufliegen können, die zur Abschottung zwischen den durch eine Trennwand gebildeten Räumen dienen und vor allem zum Schallschutz und Brandschutz vorgesehen werden. Zur Halterung der Gipskartonplatten 28 sind am Außenrand der Tragflächen 27 nach oben abgewinkelte Schenkel 29 ausgebildet, so daß sich insgesamt ein U-Profil zur Aufnahme der Gipskartonplatten 28 ergibt. Dies zeigt auch die Ausführungsform eines aus Blechstreifen ausgebildeten Hohlprofils 3 nach Fig. 5.

Bei der Ausführungsform nach den Fig. 1 und 2 sind auf der Außenseite der Schenkel 29 im Querschnitt T-förmige Nuten 30 durch entsprechend abgewinkelte Randabschnitte ausgebildet, in welche ein Nutstein 31 (Fig. 1) eingesetzt werden kann, der mit einem Seil 32 verbunden ist, dessen gegenüberliegendes Ende an dem zugeordneten Deckenelement 13 befestigt ist. Dieses Seil 32 dient zur Sicherung des Deckenelements 13, wenn dieses nach dem Aushängen aus dem Hohlprofil 3 abgesenkt werden soll. Eine derartige Ausgestaltung ist insbesondere in Verbindung mit Kühldecken vorgesehen, bei denen auf der Oberseite eines Deckenelementes 13 ein Kühlregister angebracht ist, das an eine Versorgungsleitung angeschlossen ist. Beim Abnehmen eines Deckenelementes 13 muß sichergestellt werden, daß die Anschlußleitung des Kühlregisters nicht beschädigt wird.

Bei dem Ausführungsbeispiel nach Fig. 1 sind die Deckenelemente 13 mit einer Einlage 33 z. B. aus Streifen aus Gipskartonplatten längs der Ränder versehen, damit die normalerweise offene Fuge 14 zwischen benachbarten Deckenelementen 13 besser abgedichtet und die Schalldämmung von Raum zu Raum verbessert wird. Anstelle von Gipskartonstreifen können auch Mineralfaserplatten oder Spanplatten vorgesehen werden.

Die Deckenelemente 13 nach Fig. 1 sind aus Metallblech gefertigt, dessen Ränder nach oben abgewinkelt sind und die Einlage 33 und schalldämmendes Material 34 aufnehmen. Es ist auch möglich, Deckenelemente 13' (Fig. 8) aus Mineralfaserplatten, Holzspanplatten, Gipskarton oder anderen Materialien vorzusehen, bei denen zum Einhängen am Hohlprofil 3 auf der Oberseite ein entsprechend abgewinkeltes Blechprofil 12' angebracht wird.

Der Längsspalt 10 des Hohlprofils 3 kann in Verbindung mit der Breite der abgewinkelten Einhängeränder 12 so ausgelegt werden, daß die verbleibende Fuge 14 zwischen den Rändern benachbarter Deckenelemente 13 beispielsweise 5 - 50 mm betragen kann. Vorzugsweise wird eine Fuge von 6- 12 mm vorgesehen.

Fig. 7 zeigt in einer Ansicht der abgehängten Decke von unten schematisch die Anbringung einer Trennwand 35 mittels eines Adapterstücks 16, das in einer Fuge 14' zwischen nebeneinander liegenden Deckenelementen 13 eingesetzt und bei 19 an dem auf der Sichtseite der Decke nicht sichtbaren Deckenbandraster bzw. Hohlprofil 3 befestigt ist. Hierbei wird das Adapterstück 16 mit den Flächen beiderseits des Steges 15 an der Unterseite des Hohlprofils 3 angesetzt, wie dies in Fig. 2 wiedergegeben ist. Vorzugsweise fluchten die beidseitigen Tragflächen 27 mit der Unterseite des Hohlprofils 3, so daß sich eine breite Anlagefläche ergibt. Durch die Trapezform des Adapterstücks 16, das nach unten in Richtung auf das Trennwand-Deckenprofil 20 auf dessen Breite oder auf eine noch kleinere Abmessung verjüngt ist, ist das Adapterstück 16 nach Montage der Trennwand nicht sichtbar. Die Höhenabmessung des Adapterstücks 16 zwischen den Anlageflächen am Hohlprofil 3 und am Deckenprofil 20 entspricht im wesentlichen der Höhenabmessung der Deckenelemente 13, wie aus der gestrichelten Darstellung in Fig. 2 hervorgeht. Das einen Deckenbandraster bildende Hohlprofil 3 ist nach Demontage der Trennwand nicht sichtbar, wenn das Deckenprofil 20 von den Adapterstücken 16 abgenommen ist und diese aus den Fugen 14' entfernt sind.

Durch die beschriebene Bauweise erhält man einen Deckenaufbau, bei dem die Deckenelemente 13 an den einen Deckenbandraster bildenden Hohlprofilen 3 eingehängt sind, die in einem Abstand voneinander an der Rohdecke 1 abgehängt werden, wobei zwischen benachbarten Deckenelementen 13 in Längsrichtung des Hohlprofils 3 Adapterstücke 16 in den Querfugen 14' in dem Hohlprofil lösbar eingesetzt werden können und an den Adapterstücken 16 ein Trennwand-Deckenprofil oder unmittelbar eine Trennwand lösbar befestigt werden kann, die sich in Richtung des Deckenbandrasters bzw. Hohlprofils 3 erstreckt.

Es sind verschiedene Abwandlungen der beschriebenen Bauweise möglich. Beispielsweise kann die Querschnittsform des Hohlprofils 3 in anderer Weise als dargestellt ausgebildet sein. An dem Hohlprofil 3 können zusätzliche Flansche oder entsprechend abgewinkelte Ränder angebracht werden, damit das Hohlprofil bzw. der Deckenbandraster zusätzliche Funktionen übernehmen kann.

Bei der Darstellung in Fig. 1 ist beispielsweise zwischen den Gipskartonplatten 28 zusätzlich noch ein schalldämmendes Material, beispielsweise aus Mineralfaserplatten 36, vorgesehen.

Wie Fig. 3 zeigt, kann der Deckenbandraster bzw. das Hohlprofil 3 auch in einfacher Form durch Blechstreifen zusammengesetzt werden. Fig. 2 zeigt ein Strangpressprofil als Beispiel.

In gleicher Weise können die Adapterstücke in unterschiedlicher Form ausgebildet sein. Je nach Fugenbreite zwischen den Deckenelementen 13 kann für die Adapterstücke 16 auch ein stärkeres Material Verwendung finden.

In Fig. 2 bildet der nach unten L-förmig abgewinkelte Rand 5 der nach außen in den abgesetzten Bereich 6 vorstehenden Verlängerung der oberen Wand des Hohlprofils 3 einen etwa L-förmigen Hohlraum in Verbindung mit dem abgesetzten Bereich 6. Der abgewinkelte Rand 5 liegt dabei innerhalb des abgesetzten Bereichs 6 in einem Abstand in Verlängerung der Seitenfläche 7 des Hohlprofils, so daß die Seitenflächen der Schiene 4 mit diesen fluchten können, wie Fig. 1 zeigt.

## Patentansprüche

1. Deckenaufbau mit an einer Rohdecke (1) abgehängten Deckenelementen (13), die in Längsspalten (10) von Hohlprofilen (3) eingehängt sind, die in einem Abstand voneinander an der Rohdecke (1) angebracht sind und einen Deckenbandraster bilden, wobei in der quer zur Längsrichtung des Hohlprofils (3) liegenden Querfüge (14') zwischen benachbarten Deckenelementen (13) ein Adapterstück (16) in dem Hohlprofil (3) lösbar einsetzbar ist, an dem eine Trennwand (35) bzw. ein Trennwand-Deckenprofil (20) lösbar befestigbar ist, das sich in Richtung des Hohlprofils (3) erstreckt.

2. Deckenaufbau nach Anspruch 1, wobei die Deckenelemente (13) ein abgewinkeltes Einhängeprofil (12) an den Rändern aufweisen, das am Rand des Längsspaltes (10) des Hohlprofils (3) so einhängbar ist, daß zwischen den Rändern der am Hohlprofil (3) einander gegenüberliegenden Deckenelemente (13) eine durchgehend freie Fuge (14) verbleibt, durch die hindurch der Hohlraum des Hohlprofils (3) zugänglich bleibt.

3. Deckenaufbau nach Anspruch 2, wobei die Ränder des Längsspalts (10) des Hohlprofils (3) zum Einhängen gegenüberliegender Deckenelemente nach innen abgewinkelt sind.

4. Deckenaufbau nach Anspruch 3, wobei die Enden der nach innen abgewinkelten Ränder des Längsspalts (10) wulstförmig gestaltet sind.

5. Deckenaufbau nach den vorhergehenden Ansprüchen, wobei an dem Hohlprofil (3) beiderseits Tragflächen (27) mit nach oben abgewinkelten Rändern (29) zur Ausbildung von Aufnahmetaschen für Dämmelemente (28) ausgebildet sind, wobei die Tragflächen (27) in einer Ebene mit der Unterseite des Hohlprofils (3) liegen.

6. Deckenaufbau nach den vorhergehenden Ansprüchen, wobei parallel zu dem Längsspalt (10) am Hohlprofil (3) beidseitig Nuten (24) zur Aufnahme einer Dichtung (25) ausgebildet sind, die den für die Montage notwendigen Hohlraum (26) zwischen Deckenelement (13) und Hohlprofil (3) nachgiebig abdichtet.

7. Deckenaufbau nach den vorhergehenden Ansprüchen, wobei an den Außenseiten (7)des Hohlprofils (3) bzw. an den nach oben abgewinkelten Rändern (29) im Querschnitt T-förmige Nuten (30) zur Aufhahme von Nutsteinen (31) ausgebildet sind, mittels denen über ein daran befestigtes Seil (32) die Deckenelemente (13) mit dem Hohlprofil verbunden sind.

8. Deckenaufbau nach den vorhergehenden Ansprüchen, wobei das Adapterelement (16) flächig gestaltet und mit Befestigungseinrichtungen an gegenüber liegenden Seiten versehen ist.

9. Deckenaufbau nach Ansrpuch 8, wobei das Adapterstück (16) plattenförmig mit einem nach oben abstehenden Steg (15) ausgebildet ist, an dem quer zur Ebene des Adapterstücks (16) eine Lasche (18) zum Befestigen an der Innenseite des Hohlprofils (3) angebracht ist, und an der Unterseite des Adapterstücks (16) ein Verbindungselement (17) für die anzubringende Trennwand vorgesehen ist.
